# DEMANDE DE BREVET EUROPEEN

(11) **EP 0 642 743 A1**
(43) Date de publication de la demande: **15.03.1995**
(21) Numéro de dépôt: 93114552.8
(22) Date de dépôt: 10.09.1993
(51) Int. Cl.: A23L 1/24, A23L 1/48

(54) **Produit alimentaire en poudre et procédé de préparation**

(71) Demandeur: SOCIETE DES PRODUITS NESTLE S.A., CH-1800 Vevey (CH)
(72) Inventeur: Bauer, Werner, CH-1095 Lutry (CH); Masson, Gérard, CH-1096 Cully (CH)
(74) Mandataire: Thomas, Alain

(57) **Abrégé**

La présente invention a trait à un produit alimentaire se présentant sous forme d'une émulsion huile-dans-eau déshydratée, susceptible d'être reconstitué par addition d'eau de manière à former à nouveau une émulsion stable du genre mayonnaise ou sauce à salade, et à un procédé de préparation de ladite émulsion déshydratée.

## Description

La présente invention a trait à un produit alimentaire se présentant sous forme d'une émulsion huile-dans-eau déshydratée, ainsi qu'à un procédé de préparation dudit produit. La présente invention concerne plus particulièrement une émulsion déshydratée susceptible d'être utilisée après reconstitution, comme base pour sauce à salade ou mayonnaise.

Un procédé usuel de préparation de mayonnaise consiste à former un mélange comprenant des jaunes d'oeuf, de la moutarde, du vinaigre, du sel et du poivre, puis à lui ajouter de l'huile. Dans une telle mayonnaise, l'émulsion huile-dans-eau formée est stabilisée par la lécithine contenue dans le jaune d'oeuf, grâce à ses propriétés tensioactives. La mayonnaise ainsi obtenue contient toutefois une quantité importante de matière grasse et une teneur en cholestérol élevée, provenant principalement des jaunes d'oeuf et secondairement de l'huile utilisée.
Il a été proposé, par le brevet US 5'082'674, un procédé permettant la préparation, entre autres, de mayonnaise déshydratée pouvant être reconstituée rapidement par addition d'eau.
Ce procédé consiste à préparer un mélange comprenant une lyso-phospho-lipoprotéine (LPLP), des jaunes d'oeuf modifiés et de la maltodextrine, puis à ajouter une huile de tournesol de manière à former une émulsion qui peut être homogénéisée et déshydratée par atomisation.
La réhydratation s'effectue par addition d'eau et permet l'obtention d'un produit de texture et de goût comparables à ceux d'une mayonnaise classique. Toutefois, cette mayonnaise présente l'inconvénient de contenir des jaunes d'oeufs, constituants que le consommateur souhaiterait éviter de consommer pour des raisons diététiques.

La présente invention a pour objet de pallier ces inconvénients et propose un produit du genre émulsion huile-dans-eau déshydratée, pouvant donner une mayonnaise après addition d'eau, ledit produit ne contenant pas de jaune d'oeuf, donc étant pauvre en cholestérol, ne contenant pas non plus de maltodextrine, ou d'agents épaississants ou stabilisants ajoutés, tout en présentant une stabilité remarquable.

La présente invention a pour premier objet un produit alimentaire se présentant sous forme d'une poudre, comprenant une source d'albumine, une source d'acide alimentaire, une source de matière grasse et éventuellement des compléments d'assaisonnement, le tout ayant été émulsionné, homogénéisé puis déshydraté, ledit produit alimentaire étant susceptible de former, après réhydratation, une émulsion huile-dans-eau stable, présentant un pH inférieur à 5 et un rapport albumine/matière grasse compris entre 0,14 et 1,5.

La présente invention a également pour objet un procédé de préparation dudit produit, dans lequel on prépare une phase aqueuse comprenant une source d'albumine et une source d'acide alimentaire, on prépare une phase grasse comprenant une source de matière grasse, des compléments d'assaisonnement pouvant être ajoutés aux phases aqueuse et/ou grasse, on mélange les phases aqueuse et grasse de manière à former une émulsion présentant un pH inférieur à 5 et un rapport albumine/matière grasse compris entre 0,14 et 1,5, puis l'on homogénéise l'émulsion et l'on déshydrate l'émulsion homogénéisée obtenue.

On a constaté que, de manière surprenante, il était possible d'obtenir une émulsion huile-dans-eau déshydratée présentant un pH acide et pouvant rester stable après réhydratation, sans avoir à employer d'agents de stabilisation tels que ceux du jaune d'oeuf, ou d'épaississants tels que des gommes ou des amidons, ou encore des émulsifiants tels que les lécithines.

La présente invention est remarquable par le fait qu'elle permet l'obtention, après reconstitution, d'un produit du genre mayonnaise présentant une teneur en cholestérol réduite, généralement inférieure à 10 mg pour 100 g de produit sec.

Un avantage de l'invention est de permettre une préparation industrielle aisée d'un produit qui peut se conserver longtemps sous forme de poudre.
Un autre avantage est de permettre l'obtention d'un produit se reconstituant rapidement et facilement à froid, en particulier avec l'eau du robinet.

Dans la suite de la présente description, les pourcentages et parties sont donnés en poids.

Ainsi, pour mettre en oeuvre le procédé, on prépare tout d'abord une phase aqueuse comprenant une source d'albumine et une source d'acide alimentaire.
La source d'albumine provient principalement du blanc d'oeuf, que l'on peut obtenir facilement dans le commerce soit sous forme liquide, éventuellement concentrée et préférablement pasteurisée, soit sous forme de poudre déshydratée.
On peut également utiliser un mélange de blanc d'oeuf liquide, concentré ou non, et de blanc d'oeuf en poudre.
La présente invention est particulièrement remarquable par le fait qu'elle permet d'éviter entièrement l'emploi de jaune d'oeuf, source très importante de cholestérol dont les méfaits sur la santé sont bien connus.
On peut également ajouter des protéines du lait telles que celles du lait écrémé liquide et/ou en poudre, ou un concentrat de protéines du petit lait, par exemple sous forme déshydratée, ou des protéines végétales, de manière à augmenter le taux de matière sèche de l'émulsion obtenue, ce qui a pour effet d'accroître la viscosité de l'émulsion et de favoriser l'étape d'atomisation et de séchage, tout en améliorant la texture du produit final. On peut ajouter jusqu'à 1 partie de matière sèche de lait écrémé ou de concentrat de protéines du petit lait par partie de matière sèche d'albumine.

La source d'acide alimentaire peut être de l'acide citrique et/ou de l'acide acétique, provenant du jus de citron ou du vinaigre par exemple.

On peut également ajouter à ladite phase aqueuse des compléments d'assaisonnement alimentaires, sous forme liquide, pâteuse ou en poudre, tels que de la moutarde, du sel, du poivre, des épices, de l'arôme d'oeuf, ou tout autre complément d'aromatisation souhaité par le consommateur comme par exemple des arômes ou des jus ou extraits de fruits et/ou de légumes.
On a en effet constaté, de manière surprenante, que l'ajout de compléments d'assaisonnement n'entraîne pas de déstabilisation de l'émulsion, sous forme de séparation de phase, ce qui présente comme avantage de pouvoir assaisonner préalablement l'émulsion à déshydrater, de manière à obtenir un produit reconstitué pouvant être assaisonné selon les goûts des consommateurs.
On peut également enrichir la phase aqueuse en vitamines et/ou sels minéraux hydrosolubles.

On peut préparer ce mélange à toute température, la dissolution éventuelle du lait écrémé en poudre dans le blanc d'oeuf liquide étant plus rapide entre 30 et 40°C. Il est également possible de préparer ce mélange à une température plus basse, d'environ 4 à 10°C, afin de maintenir de bonnes conditions de sécurité bactériologique.
On obtient ainsi une phase aqueuse, à laquelle il n'est pas nécessaire d'ajouter de l'eau, et présentant un taux de matière sèche d'environ 20 à 50 %.

De manière parallèle, on prépare une phase grasse, qui peut comprendre une ou plusieurs matières grasses d'origine animale ou végétale, telle que l'huile de tournesol, de soja, d'olive, d'arachide, de colza, de canola et/ou de maïs, et peut également contenir des vitamines liposolubles ou tout autre ingrédient liposoluble tel que des compléments d'aromatisation, huiles aromatiques et/ou des colorants alimentaires.

On ajoute la phase grasse à la phase aqueuse en une quantité telle qu'on puisse obtenir un rapport albumine/matière grasse compris entre 0,14 et 1,5.
On a en effet constaté que lorsque ce rapport est inférieur à 0,14, l'émulsion obtenue n'est pas suffisamment stable, et que lorsque ce rapport est supérieur à 1,5, d'une part l'émulsion contient trop de matière sèche et devient difficilement pompable et d'autre part, le produit final présente, après reconstitution, un goût et une apparence altérés, ainsi qu'une texture en bouche granuleuse, crayeuse ou farineuse, due probablement à la présence d'une trop grande quantité de protéines.
Ainsi, le rapport tel que défini dans la présente invention garantit une bonne homogénéité et stabilité de l'émulsion, et permet également une excellente reconstitution du produit final par simple adjonction d'eau.

On forme alors une émulsion en mélangeant lentement les phases aqueuse et grasse, par exemple en incorporant doucement la phase grasse dans la phase aqueuse tout en maintenant une agitation constante et, de préférence une température d'environ 4 à 10°C, toujours pour des raisons bactériologiques.
On obtient ainsi une émulsion huile-dans-eau, présentant un pH inférieur à 5 dépendant de sa composition, mais généralement compris entre 2,9 et 4,5, ne contenant pas de jaune d'oeuf, et présentant un rapport albumine/matière grasse compris entre 0,14 et 1,5.
Le taux de matière sèche de ladite émulsion est de préférence compris entre 20 et 50 % de manière à en permettre le pompage, l'homogénéisation et la déshydratation.

On homogénéise alors l'émulsion, sous pression élevée, de manière à diminuer la taille des gouttelettes de la phase grasse jusqu'à environ 1 µm, voire moins.
On a observé que l'homogénéisation permet d'améliorer les qualités de réhydratation de la poudre déshydratée, ainsi que ses propriétés fonctionnelles comme, par exemple, l'aptitude à former un gel ferme et stable, ce qui est important dans le cas où l'on souhaite reconstituer un produit ayant l'apparence, la texture et la consistance d'une mayonnaise.
On peut employer un homogénéisateur à deux étages, selon les méthodes habituelles. On peut toutefois prendre la précaution de ne pas dépasser une pression trop élevée, de l'ordre de 350 bars, de manière à éviter une dénaturation des protéines qui entraînerait une perte de fonctionnalité et conduirait à une séparation de phase irréversible de l'émulsion.
L'homogénéisation peut être effectuée à toute température bien inférieure à la température de coagulation du blanc d'oeuf, de préférence à une température de 4 à 40°C, et préférentiellement à 4-10°C.

L'émulsion ainsi homogénéisée est alors déshydratée par tout procédé connu, tel que la lyophilisation ou l'atomisation.
On obtient ainsi une poudre qui peut être éventuellement agglomérée par tout procédé connu.

On obtient ainsi un produit en poudre pouvant être utilisé directement, après reconstitution par addition de tout liquide alimentaire tel que l'eau, le vinaigre, le vin, les jus de fruits ou de légumes, les bouillons, le lait, la crème ou même le yaourt par exemple, ou de toute autre substance susceptible de permettre sa réhydratation, comme base pour sauce à salade, mayonnaise ou sauce froide (dressing).
L'utilisation ultérieure du produit reconstitué dépend principalement de la quantité de liquide qu'on lui ajoute, donc de sa viscosité, qui en détermine la consistance, plus ferme pour une base pour mayonnaise et plus ou moins liquide pour une base pour sauce à salade.
D'une manière générale, par addition d'une partie en poids d'eau pour 1 à 4 parties en poids dudit produit en poudre, on peut reconstituer un produit consommable ayant la consistance de la sauce à salade ou de la mayonnaise.
Le produit en poudre selon l'invention présente aussi l'avantage d'être immédiatement reconstituable à froid, dans un liquide tel que l'eau, et de permettre la préparation d'une émulsion homogène et stable, sans séparation de phase.

Le produit obtenu après réhydratation contient peu de cholestérol, provenant principalement de la source de matière grasse et éventuellement des compléments d'assaisonnement, et est donc nutritivement sain, tout en présentant une texture et un goût comparable aux sauces à salades ou mayonnaises obtenues selon un procédé classique.

De plus, le produit reconstitué obtenu est très stable et peut se conserver pendant 2 à 3 jours à température ambiante et 1 à 2 semaines à la température du réfrigérateur, sans que l'on puisse observer de séparation de phase ou d'autres dégradations, microbiologiques par exemple.
Il est possible de lui ajouter, après reconstitution, des ingrédients alimentaires tels que sels, huiles végétales ou animales, essentielles ou aromatiques, jus de fruits ou de légumes, épices, crèmes et yaourts, ou tout autre condiment sous forme liquide, pâteuse ou en poudre, ou tout autre complément d'aromatisation, de manière à personnaliser ledit produit final au goût du consommateur, sans entraîner de déstabilisation du produit.

L'invention est illustrée plus en détail dans les exemples de réalisation suivants.

### Exemple 1

On prépare un premier mélange comprenant 90 kg de blanc d'oeuf liquide pasteurisé et 3 kg de lait écrémé en poudre. On mélange cette phase aqueuse pendant 20 minutes à 10°C. On ajoute à cette phase aqueuse, 8 kg d'huile de tournesol préalablement refroidie à 10°C, tout en maintenant une agitation constante de manière à obtenir une émulsion huile-dans-eau.
On homogénéise l'émulsion ainsi obtenue de manière à obtenir une émulsion fine et stable dont la taille des particules est de 0,35 µm et présentant un taux de matière sèche de 22,5%.
Le rapport protéines totales/lipides est de 1,5 et le rapport albumine/protéines totales est de 0,75.
On déshydrate ladite émulsion par atomisation dans les conditions usuelles.

Le produit en poudre ainsi obtenu présente un taux de matière sèche de 97%.
Sa composition est la suivante: protéines 52%, glucides 10%, lipides 34%, sels minéraux 1%.
De plus, 100 g de produit en poudre contiennent 7 mg de cholestérol.

On reconstitue le produit par addition de 75 ml d'eau à 25 g de produit en poudre. On obtient une base pour sauce à salade, à laquelle on peut encore ajouter vinaigre, moutarde, sel et épices, ou tout autre complément d'assaisonnement.
Le produit obtenu est comparable, en texture et en goût, à ceux obtenus de manière traditionnelle.

On peut également reconstituer le produit en ajoutant 150 ml d'eau à 50 g de poudre, puis en ajoutant 5 g de moutarde et 3 g de sel à l'émulsion reconstituée, et enfin, 300 g d'huile de table végétale et 30 g de vinaigre.
On obtient ainsi une mayonnaise qui a une belle apparence, une bonne odeur d'oeuf, ainsi qu'une texture et un goût adéquats.

### Exemple 2

On prépare un premier mélange comprenant 26 g de moutarde, 44 g de vinaigre, 80 g de jus de citron, 5 g de sauce Worcester et 2 g de sel, que l'on mélange pendant environ 30 minutes à température ambiante. On ajoute ce premier mélange à 570 g de blanc d'oeuf liquide pasteurisé et 15 g de lait écrémé en poudre. On mélange cette phase aqueuse pendant 30 minutes à 10°C. On ajoute à cette phase aqueuse, 260 g d'huile de tournesol préalablement refroidie à 10°C, tout en maintenant une agitation constante de manière à obtenir une émulsion huile-dans-eau, présentant un pH de l'ordre de 3,8-4,2.

On homogénéise l'émulsion ainsi obtenue de manière à obtenir une émulsion fine et stable dont la taille des particules est inférieure à 6 µm et présentant un taux de matière sèche de 36%.
On déshydrate ladite émulsion par lyophilisation dans les conditions usuelles.

Le produit en poudre ainsi obtenu présente un taux de matière sèche de 98%.
Sa composition est la suivante: protéines 20%, glucides 4%, lipides 72%, sels minéraux 2%.
Le rapport protéines totales/lipides est de 0,3 et le rapport albumine/protéines totales de 0,8.

On reconstitue le produit par addition d'une partie d'eau à une partie de produit. On obtient une base pour mayonnaise présentant un pH de 4, base à laquelle on peut ajouter de l'huile de tournesol, par exemple, afin d'obtenir une mayonnaise comparable, en texture et en goût, à celles obtenues de manière traditionnelle.
La base ainsi préparée reste stable, sans séparation de phase, pendant au moins 8 heures.
La teneur en cholestérol de la mayonnaise ainsi obtenue est de l'ordre de 5 mg pour 100 g alors qu'elle est d'au moins 180 mg/100 g, pour une mayonnaise habituelle préparée par la ménagère.

On peut également reconstituer le produit par addition d'une partie de ketchup à une partie de poudre. On obtient ainsi une sauce du type mayonnaise, colorée et aromatisée tomate, présentant un pH de 4,5/5,0, qui reste stable pendant au moins 8 heures.
La teneur en cholestérol de ladite base est inférieure à 5 mg pour 100 g de produit.

### Exemple 3

On prépare un premier mélange comprenant 4,8 kg de blanc d'oeuf liquide, 0,17 kg de banc d'oeuf en poudre, 0,17 kg de poudre de lait écrémé, 0,85 kg de vinaigre et 0,01 kg de chlorure de sodium.
On mélange cette phase aqueuse pendant 30 minutes à 10°C. On ajoute à cette phase aqueuse, 4,0 kg d'huile de soja préalablement refroidie à 10°C, tout en maintenant une agitation constante de manière à obtenir une émulsion huile-dans-eau, présentant un pH de l'ordre de 3,8-4,2.

On homogénéise l'émulsion ainsi obtenue de manière à obtenir une émulsion fine et stable dont la taille des particules est inférieure à 5 µm et présentant un taux de matière sèche de 50%.
On déshydrate ladite émulsion par lyophilisation dans les conditions usuelles.

Le produit en poudre ainsi obtenu présente un taux de matière sèche de 98%.
Sa composition est la suivante: protéines 15%, glucides 3%, lipides 79%, sels minéraux 1%.
Le rapport protéines totales/lipides est de 0,2 et le rapport albumine/protéines totales de 0,6.

On reconstitue le produit par addition de 2 parties d'eau à une partie de produit. On obtient une base pour mayonnaise présentant un pH de 4, base à laquelle on peut ajouter de l'huile de tournesol, par exemple, afin d'obtenir une mayonnaise comparable, en texture et en goût, à celles obtenues de manière traditionnelle.
La base ainsi préparée reste stable, sans séparation de phase, pendant au moins 8 heures.
La teneur en cholestérol de la mayonnaise ainsi obtenue est inférieure à 5 mg pour 100 g de produit.
On peut également reconstituer le produit par addition de 3 parties d'eau à une partie de poudre. On obtient ainsi une sauce à salade, à laquelle on peut ajouter du yaourt par exemple, présentant un pH de 4,5/5,0, qui reste stable pendant au moins 8 heures.
La teneur en cholestérol de ladite base est de l'ordre de 3 mg pour 100 g de produit.

### Exemple 4 (Tests de conservation)

On conditionne le produit en poudre obtenu selon l'exemple 2 dans des boîtes métalliques de 250 ml.
On conserve ces boîtes pendant un certain temps à température ambiante, puis l'on reconstitue un échantillon du produit par addition d'eau (1 partie de produit par partie d'eau).
Les échantillons reconstitués sont testés par un panel de 15 dégustateurs entraînés.

On obtient les résultats suivants:
. pour le produit sec après 5 mois de stockage: le produit se conserve bien et se réhydrate facilement. Le produit reconstitué présente un goût, une apparence et une texture comparables à ceux d'une mayonnaise préparée à partir du produit sec frais.
. pour un produit reconstitué à partir d'un produit en poudre stocké 2 mois à l'air libre, on constate un léger changement de goût.

## Revendications

1. Produit alimentaire se présentant sous forme d'une poudre, comprenant une source d'albumine, une source d'acide alimentaire, une source de matière grasse et éventuellement des compléments d'assaisonnement, le tout ayant été émulsionné, homogénéisé puis déshydraté, ledit produit alimentaire étant susceptible de former, après réhydratation, une émulsion huile-dans-eau stable, présentant un pH inférieur à 5 et un rapport albumine/matière grasse compris entre 0,14 et 1,5.

2. Procédé de préparation d'une émulsion huile-dans-eau se présentant sous forme d'une poudre, dans lequel on prépare une phase aqueuse comprenant une source d'albumine et une source d'acide alimentaire, on prépare une phase grasse comprenant une source de matière grasse, des compléments d'assaisonnement pouvant être ajoutés aux phases aqueuse et/ou grasse, on mélange les phases aqueuse et grasse de manière à former une émulsion présentant un pH inférieur à 5 et un rapport albumine/matière grasse compris entre 0,14 et 1,5, puis l'on homogénéise l'émulsion et l'on déshydrate l'émulsion homogénéisée obtenue.

3. Produit alimentaire selon la revendication 1, dans lequel on ajoute à la phase aqueuse des protéines du lait ou végétales.

4. Procédé selon la revendication 2, dans lequel on ajoute à la phase aqueuse des protéines du lait ou végétales.

5. Base pour mayonnaise en poudre selon la revendication 1, comprenant de 20 à 85 % de lipides, de 5 à 25 % de protéines, de 1 à 55 % de glucides et de 0 à 5 % de sels minéraux, se reconstituant par addition d'eau dans un rapport de 1 partie d'eau pour 1 à 4 parties de produit en poudre.

6. Utilisation du produit selon la revendication 1, après réhydratation par addition d'eau dans un rapport eau/produit de 1/1 à 1/4, comme base pour mayonnaise ou sauce à salade.
